# EUROPÄISCHE PATENTANMELDUNG

(11) **EP 2 520 623 A1**
(43) Veröffentlichungstag der Anmeldung: **07.11.2012**
(21) Anmeldenummer: 11003554.0
(22) Anmeldetag: 02.05.2011
(51) Int. Cl.: C09D 7/12, H01B 3/30, H02K 15/04

(54) **Isolationslack und Isolationslaminat**

(71) Anmelder: ABB AG, 68309 Mannheim (DE)
(72) Erfinder: Nelges, Jörg, 74821 Mosbach (DE)

(57) **Zusammenfassung**

Die Erfindung betrifft einen Isolationslack, der einen Basislack und einen Zusatz von einem Gleitmittel aufweist. Die Erfindung betrifft auch ein Isolationslaminat (12, 36) welches eine Basislaminatschicht aufweist. Diese ist zumindest auf einer ihrer flächigen Seiten mit einer Schicht (16, 17) eines erfindungsgemäßen Isolationslackes überzogen.

## Beschreibung

Die Erfindung betrifft einen Isolationslack und ein Isolationslaminat welches eine Basislaminatschicht aufweist.

Es ist allgemein bekannt, dass rotierenden elektrischen Maschinen oder Generatoren zumeist wenigstens ein aus einem Blechpaket gefertigtes Basiselement wie beispielsweise einen Stator aufweisen, in welchem ein bei Betrieb dieser Komponente auftretender magnetischer Fluss geführt wird. Die Ausführung mittels Blechpaketen dient hierbei überwiegend der Vermeidung oder zumindest Reduktion von Wirbelströmen.

Die für derartige Komponenten notwendigen elektrischen Wicklungsleiter, beispielsweise eine Statorwicklung, sind hierbei zumeist in Wicklungsnuten geführt, welche als kanalähnliche Aussparungen durch die jeweiligen Blechpakete gebildet sind. Die Wicklungsnuten sind hierbei üblicherweise an ihren Grenzflächen durch einen flächigen Isolierstoff ausgekleidet, so dass die elektrische Isolation zwischen Wicklung und Blechpaket vorteilhaft gesteigert ist. Als Isolationsmaterialien werden ein- oder mehrlagige flexible Flächenisolationsstoffe (IEC 60626-3) eingesetzt. Diese flexiblen Isolationsstoffe können darüber hinaus mit Beschichtungen zum Verkleben gegen das Blechpaket bzw. mit Beschichtungen zur Erhöhung der Alterungsbeständigkeit (IEC 60626-3 Blatt 502ff) bei höherer Temperatur eingesetzt werden

Bei der Herstellung von derartigen Maschinen oder Generatoren sind daher zunächst das jeweilige Blechpaket beziehungsweise auch weitere Komponenten zu fertigen, wobei anschließend der jeweilige Wicklungsleiter in die Nuten eingezogen wird. Gerade bei kleineren Maschinen, beispielsweise bei Motoren im Leistungsbereich von <1kW bis 10kW und darüber wird ein Wicklungsleiter beim Einbringen in die jeweiligen Wicklungsnuten zumindest teilweise durch diese gezogen.

Nachteilig ist jedoch, dass die bekannten in der Norm beschriebenen Flächenisolationsstoffe eine materialabhängige Oberflächenrauhigkeit aufweisen, die bei automatisierter Verarbeitung einen die Fertigungsgeschwindigkeit begrenzenden Faktor darstellt. Üblicherweise wird bei automatisierter Fertigung zunächst der Nutkasten isoliert und anschließend die Wicklung gemeinsam mit einem Nutverschluss eingezogen. Hierbei reiben einerseits die Wicklung an der Nutkastenisolation und andererseits die Nutkastenisolation am Nutverschluss. In Abhängigkeit des COF (Coefficient of Friction) der Reibpartner kann es zu einer Beschädigung der Isolation kommen, bzw. das Einziehen der Isolation wird verhindert.

Ausgehend von diesem Stand der Technik ist es Aufgabe der Erfindung, einen Flächenisolationsstoff oder Materialien hierfür bereitzustellen, durch welche die zuvor beschriebenen Reibungseffekte reduziert sind.

Diese Aufgabe wird gelöst durch einen Isolationslack der eingangs genannten Art. Dieser ist gekennzeichnet durch einen Hauptanteil an Basislack und einen Zusatz von einem Gleitmittel. Typischerweise sind Flächenisolationsstoffe zumindest einseitig, vorzugsweise aber beidseitig mit einem Basislack beschichtet, welcher der Verbesserung der Alterungsbeständigkeit dient. Dieser Basislack trägt aber auch in einem erheblichen Maß zu der Reibecharakteristik längs der Oberfläche des Flächenisolationsstoffes bei. Durch Zugabe eines Gleitmittels zu dem Basislack ist ein erfindungsgemäßer Isolationslack bereitgestellt, welcher nach Aufbringung auf den Flächenisolationsstoff und seiner Aushärtung, beispielsweise aufgrund seiner Ausgestaltung als Zweikomponentenlack, in vorteilhafter Weise eine verbesserte Reibungscharakteristik ermöglicht.

Entsprechend einer bevorzugten Ausgestaltung des erfindungsgemäßen Isolationslackes ist der Basislack ein Polyesterimid- oder Epoxidlack. Derartige Lacke haben sich für die Beschichtung von Flächenisolationsstoffen auch ohne erfindungsgemä-βen Materialzusatz bewährt, wenn auch mit verbesserungsfähigem Reibungsverhalten. Bevorzugter Weise sind derartige Lacke als Zweikomponentenmaterial aufgebaut, also mit einem Stammlack und einem Härter, welche kurz vor deren Applikation miteinander gemischt werden und dann aushärten.

Entsprechend einer weiteren Ausgestaltungsform des erfindungsgemäßen lsolationslackes wird als Gleitmittelzusatz eine Amidwachsdispersion mit einem Gewichtsanteil von 2% bis 25% des erfindungsgemäßen Isolationslackes verwendet, wobei der untere Bereich von 2% bis 10% besonders bevorzugt ist. Es hat sich nämlich herausgestellt, dass zur Lösung der erfindungsgemäßen Aufgabe bereits kleinere Mengen des Zusatzes ausreichend sind. Typischerweise ergänzen sich Basislack und Gleitmittelzusatz zu 100%.

Die erfindungsgemäße Aufgabe wird auch gelöst durch ein Isolationslaminat, welches eine Basislaminatschicht aufweist, welche zumindest auf einer ihrer flächigen Seiten mit einer Schicht eines erfindungsgemäßen Isolationslackes überzogen ist. Dieser ist idealerweise ausgehärtet, weil dann die Reibungseigenschaften der Oberfläche des erfindungsgemäßen lsolationslaminates am besten ausgeprägt sind.

Das erfindungsgemäße Gleitmittel, bevorzugter Weise eine Amidwachsdispersion, hat nämlich die Eigenschaft, dass es sich bei Raumtemperatur auf der Oberfläche der getrockneten Isolationslackschicht anreichert und bei Temperaturen größer 60°C von der Oberfläche wegmigriert, sich also in das Innere der getrockneten Isolationslackschicht zurückzieht. Dies hat einerseits den Vorteil, dass bei Einbringen eines Wicklungsleiters in die Wicklungsnuten, welche mit einem erfindungsgemäßen Isolationslaminat ausgekleidet sind, eine extrem glatte Oberfläche zur Verfügung gestellt ist, durch welche ein Gleiten beim Einziehen des Wicklungsleiters begünstigt ist. Das Einbringen von Wicklungsleitern erfolgt nämlich erfindungsgemäß bei Raumtemperatur, also in einem Temperaturbereich von etwa 15°C bis 30°C, bevorzugter Weise bei ca. 20°C.

Auf der anderen Seite ist eine derartige Gleitschicht aber von Nachteil für einen üblicherweise danach durchzuführenden Verguss des eingezogenen Wicklungsleiters, sofern dieser ebenfalls bei Raumtemperatur erfolgt. Durch einen Verguss soll die Wicklung beziehungsweise der Wicklungsleiter abschließend stabilisiert werden um eine hohe Robustheit des Endproduktes, beispielsweise des Motors, zu erreichen. Eine derartige Gleitschicht würde dem Ziel eines Vergusses also entgegenwirken, weil eine Haftung der Vergussmasse an dem Wicklungsleiter erheblich reduziert wäre.

Typischerweise erfolgt ein solcher Verguss jedoch nicht unter Raumtemperaturbedingungen, sondern entweder mit einer heißen Vergussmasse oder aber auch unter Erhitzung der betreffenden Komponente auf eine Trocknungstemperatur der Vergussmasse, beispielsweise 110°C. In diesem Fall migriert die Gleitschicht temperaturbedingt in das Innere der Lackschicht und die Vergussmasse kann sich während ihrer Aushärtung kraftschlüssig mit der Wicklung beziehungsweise dem Wicklungsleiter verbinden. Damit ist eine Stabilisierung der Wicklung durch die Vergussmasse in vorteilhafter Weise gewährleistet.

Unter der Voraussetzung, dass eine Vergussmasse gewählt wird, welche bei der Verarbeitung oder zum Aushärten keine erhöhte Temperatur benötigt, ist diese dann entsprechend zu erwärmen. Dies kann entweder direkt erfolgen, oder aber auch indirekt durch Erwärmen der Wicklung, beispielsweise auch durch temporäres Einprägen eines Kurzschlussstromes in die elektrisch betriebsfähige Wicklung.

Es hat sich gezeigt, dass eine mittlere Dicke der Isolationslackschicht im Bereich von 2µm bis 15µm sich als besonders günstig bezüglich der damit erreichten Gleit- beziehungsweise auch Isolationseigenschaften erweist. Im Verhältnis dazu liegen die typischen Schichtdicken einer Basislaminatschicht im Bereich von 90µm bis 800µm. Der untere Schichtdickenbereich der Basislaminatschicht ist durch eine dann zu geringe mechanische Stabilität des Isolationslaminates begrenzt, der obere Schichtdickenbereich durch eine dann zu geringe mechanische Flexibilität des Isolationslaminates, so dass es nicht mehr problemlos in eine Wicklungsnut einzulegen ist. Entsprechend weiterer bevorzugter Ausführungsformen haben sich folgende Basislaminate, welche bereits ohne erfindungsgemäßen Gleitmittelzusatz für einen vergleichbaren Zweck eingesetzt werden, als besonders geeignet erwiesen, als Basislaminatmaterial für ein erfindungsgemäßes Isolationslaminat verwendet zu werden:
- Pressspan / PET-Folien Laminat,
- PET-Folien / PET-Vlieslaminat,
- NOMEX / PET-Folien Laminat,
- NOMEX / Polymidfolien Laminat.

NOMEX ist eine dem Fachmann gebräuchliche Bezeichnung für Aramidpapier. Derartige Laminate sind typischerweise mehrschichtig und vom Schichtaufbau her symmetrisch, beispielsweise mit 2 oder 3, aber auch mehr Schichten. Bei den oben genannten Kombinationen ist unter anderem eine besonders gute Haftung des erfindungsgemäßen Isolationslackes an der Oberfläche des Basislaminates gegeben. In diesem Zusammenhang sei erwähnt, dass das Basislackmaterial vorzugsweise ein 2-Komponentenmaterial ist, so dass für dessen Aushärtung eine geringere Temperatur notwendig ist und sich die Gleitschicht während der Trocknungsphase des erfindungsgemäßen Isolationslackes an der Oberfläche der Lackschicht anreichert.

Die erfindungsgemäße Aufgabe wird auch gelöst durch ein Verfahren zum Einbringen einer Wicklung in wenigstens eine Wicklungsnut eines Stators oder Läufers, umfassend folgende Schritte:
- Auslegen der wenigstens einen Wicklungsnut mit einem erfindungsgemäßen Isolationslaminat
- Einziehen eines Wicklungsleiters in die wenigstens eine Wicklungsnut unter Raumtemperaturbedingungen
- Verguss des Wicklungsleiters in der wenigstens einen Wicklungsnut unter erhöhter Temperatur.

Die erfindungsgemäßen Vorteile dieses Verfahrens sind bereits im Zusammenhang mit dem erfindungsgemäßen Isolationslaminat erläutert worden.

Weitere vorteilhafte Ausgestaltungsmöglichkeiten sind den weiteren abhängigen Ansprüchen zu entnehmen.

Anhand der in den Zeichnungen dargestellten Ausführungsbeispiele sollen die Erfindung, weitere Ausführungsformen und weitere Vorteile näher beschrieben werden.

Es zeigen:
- Fig. 1: einen Schnitt durch ein exemplarisches Isolationslaminat und
- Fig. 2: Arbeitsschritte A, B, C beim Einbringen eine Wicklungsleiters.

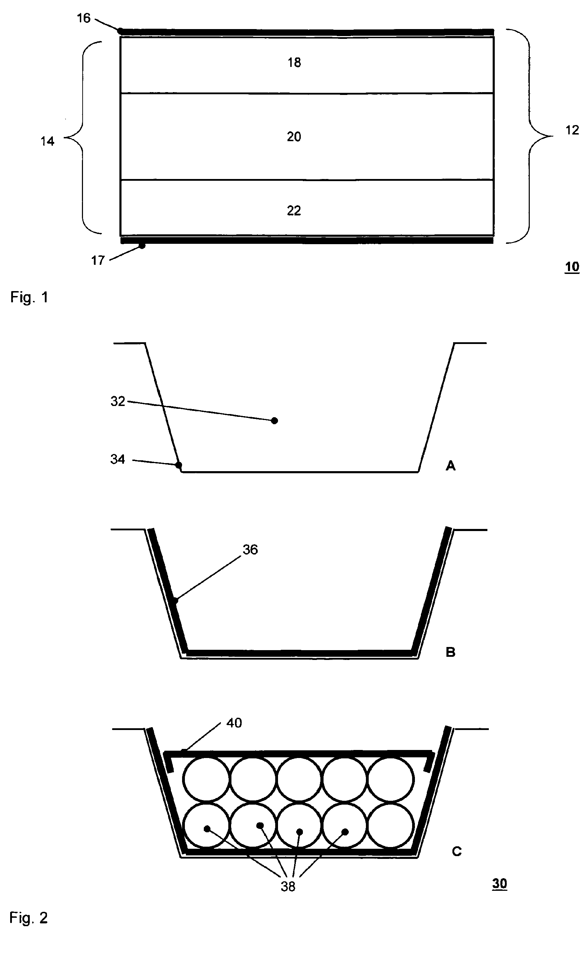

Fig. 1 zeigt einen Schnitt 10 durch ein exemplarisches erfindungsgemäßes Isolationslaminat 12 mit einem dreischichtigen Basislaminat 14 und beidseitiger Beschichtung mit einer Isolationslackschicht 16, 17 mit einem Zusatz von Gleitmittel. Die Schichtdicken der Isolationslackschichten 16, 17 betragen in diesem Fall jeweils etwa 5µm. Das Basislaminat umfasst eine mittlere Laminatschicht 20 mit einer Schichtdicke von etwa 200µm aus einem PET-Vlieslaminat. Die beiden äußeren Laminatschichten 18, 22 sind aus einem PET-Vlies gefertigt und weisen eine Schichtdicke von jeweils 50µm auf.
Fig. 2 zeigt exemplarische Arbeitsschritte A, B, C beim Einbringen eine Wicklungsleiters in eine Wicklungsnut in einer Ansicht 30. In der ersten Darstellung 30A ist eine Wicklungsnut 32 gezeigt, welche in einem Blechpaket eines Stators eines Motors eingelassen ist, wie mit deren Grenzflächen 34 angedeutet ist. Je nach Motorgröße und Leistung beträgt die Tiefe der Wicklungsnut beispielsweise 1cm bis 3cm für Motoren kleinerer Größe, beispielsweise für Bohrmaschinen oder Staubsauger. Die Nutbreite liegt beispielsweise in einem Bereich von 0,5 cm bis 6cm. Selbstverständlich sind aber auch bedeutend größere Motoren oder Generatoren mit entsprechend anderen Nutabmessungen denkbar.

In der Darstellung 30B ist ein in die Wicklungsnut eingelegtes, gefaltetes erfindungsgemäßes Isolationslaminat 36 dargestellt, welches eine Dicke von etwa 200µm aufweist. Bei der in diesem Beispiel angenommenen geringen Motorleistung und damit auch Motorspannung ist dies für die elektrische Isolation von angenommenen maximal 1 kV absolut ausreichend.

In der Darstellung 30C ist zusätzlich ein eingelegter Wicklungsdraht 38 angedeutet, wobei der Leiterquerschnitt absolut nicht maßstäblich ist, vielmehr ist mit einer deutlich höheren Anzahl an Windungen des Wicklungsleiters 38 mit einem entsprechend geringerem Querschnitt zu rechnen. Die aus dem Wicklungsleiter 38 gebildete_Wicklung erstreckt sich wenigstens noch über eine weitere, symmetrisch gegenüber liegende und nicht gezeigte Wicklungsnut. Die Wicklungsnut beziehungsweise der Nutkasten ist mit einem Nutverschluss 40 aus ebenfalls einem erfindungsgemäßen Isolationslaminat abgedeckt, dieses hat jedoch aus mechanischen Gründen eine etwas erhöhte Schichtdicke. Die Wicklung ist als vergossen anzunehmen, so dass der Nutkasten mit dem darin angeordneten Wicklungsleiter 38 mit einer nicht dargestellten Vergussmasse gefüllt ist, durch welche die Wicklung verfestigt ist.

### Bezugszeichenliste

- 10: Schnitt durch ein exemplarisches Isolationslaminat
- 12: Isolationslaminat
- 14: Basislaminatschicht
- 16: erste Isolationslackschicht
- 17: zweite Isolationslackschicht
- 18: erste Lage des Basislaminates
- 20: zweite Lage des Basislaminates
- 22: dritte Lage des Basislaminates
- 30: Arbeitsschritte A, B, C beim Einbringen eine Wicklungsleiters
- 32: Innenraum einer exemplarischen Wicklungsnut
- 34: Grenzfläche einer exemplarischen Wicklungsnut
- 36: Isolationslaminat
- 38: Wicklungsleiter
- 40: Nutverschluss

## Patentansprüche

1. Isolationslack, **dadurch gekennzeichnet, dass** dieser einen Basislack und einen Zusatz von einem Gleitmittel aufweist.

2. Isolationslack nach Anspruch 1, **dadurch gekennzeichnet, dass** der Basislack ein Polyesterimid- oder Epoxidlack ist.

3. Isolationslack nach einem der Ansprüche 1 oder 2, **dadurch gekennzeichnet, dass** der Zusatz eine Amidwachsdispersion mit einem Gewichtsanteil von 2% bis 25% ist.

4. Isolationslaminat (12, 36), aufweisend eine Basislaminatschicht (14), **dadurch gekennzeichnet, dass** diese zumindest auf einer ihrer flächigen Seiten mit einer Schicht (16, 17) eines Isolationslackes nach einem der Ansprüche 1 bis 3 überzogen ist.

5. Isolationslaminat nach Anspruch 4, **dadurch gekennzeichnet, dass** die mittlere Dicke des Basislaminates (14) im Bereich von 80µm bis 1000µm liegt.

6. Isolationslaminat nach einem der Ansprüche 4 oder 5, **dadurch gekennzeichnet, dass** der Isolationslack ausgehärtet ist.

7. Isolationslaminat nach Anspruch 6, **dadurch gekennzeichnet, dass** die mittlere Dicke der Isolationslackschicht (16, 17) im Bereich von 2µm bis 15µm liegt.

8. Isolationslaminat nach einem der Ansprüche 4 bis 7, **dadurch gekennzeichnet, dass** als Basislaminat (14) ein Pressspan / PET-Folien Laminat verwendet ist.

9. Isolationslaminat nach einem der Ansprüche 4 bis 7, **dadurch gekennzeichnet, dass** als Basislaminat ein PET-Folien / PET-Vlieslaminat verwendet ist.

10. Isolationslaminat nach einem der Ansprüche 4 bis 7, **dadurch gekennzeichnet, dass** als Basislaminat (14) ein NOMEX / PET-Folien Laminat verwendet ist.

11. Isolationslaminat nach einem der Ansprüche 4 bis 7, **dadurch gekennzeichnet, dass** als Basislaminat (14) ein NOMEX / Polymidfolien Laminat verwendet ist.

12. Verfahren zum Einbringen einer Wicklung in wenigstens eine Wicklungsnut (32) eines Stators oder Läufers, umfassend folgende Schritte:
• Auslegen der wenigstens einen Wicklungsnut (32) mit einem Isolationslaminat (12, 36) nach einem der Ansprüche 5 bis 12
• Einziehen eines Wicklungsleiters (38) in die wenigstens eine Wicklungsnut (32) unter Raumtemperaturbedingungen
• Verguss des Wicklungsleiters (38) in der wenigstens einen Wicklungsnut (32) unter erhöhter Temperatur
